# EUROPEAN PATENT APPLICATION

(11) **EP 4 230 920 A1**
(43) Date of publication of application: **23.08.2023**
(21) Application number: 23157352.8
(22) Date of filing: 17.02.2023
(51) Int. Cl.: F24D 10/00

(54) **A DISTRICT HEATING PIPE FOR INCORPORATION IN A DISTRICT HEATING TUBE NETWORK**

(30) Priority: 18.02.2022 DK PA202270063
(71) Applicant: FRESE A/S, 4200 Slagelse (DK)
(72) Inventor: Martiena, Mikael Søgaard, 5000 Odense C (DK); Graugaard, René Hyllested, 7400 Herning (DK)
(74) Representative: AWA Denmark A/S

(57) **Abstract**

A district heating pipe (11) for incorporation in a district heating tube network, with a flow valve (20) for shutting off a flow and a branch pipe (30) extending from the district heating pipe (11) to a remote end (31) with a service valve (32) at the remote end (31), said service valve (32) comprising a valve housing (33) with an inlet (34) connected to the remote end (31), an outlet (35), a valve body, and an access point (37) for operating the valve body, wherein the access point (37) is positioned opposite to the inlet (34) on the valve housing (33) and the outlet (35) is positioned on a side of the valve housing (33).

## Description

The present invention relates to a district heating pipe for incorporation in a district heating tube network or system, with a flow valve for shutting off or throttling a flow in the district heating tube network and a branch pipe extending from the district heating pipe to a remote end of the branch pipe, said branch pipe having a service valve at the remote end, said service valve comprising a valve housing with an inlet connected to the remote end of the branch pipe, an outlet, a valve body, and an access point for operating the valve body between an open position, in which a fluid passage through the service valve from the inlet to the outlet is open, and a closed position, in which the fluid passage through the service valve from the inlet to the outlet is closed.

In district heating tube networks flow valves are provided for shutting off or throttling a flow in a branch of tubing in the network. Such flow valves are normally provided in the ground and an access point for operating the flow valve is normally provided in a well or manhole. The access point may be provided by a vertical stem or shaft extending from the flow valve to an upper end of the stem, which is provided e.g. with a hexagon end, for engagement with a tool, e.g. a manual tool for attachment to the upper end of the stem for rotating the stem around a longitudinal, preferably vertical, axis thereof.

Usually, on one or both sides of such flow valve, i.e. upstream and/or downstream of the flow valve, a service valve is provided for access into the district heating tube and to a fluid in the district heating tube.

For the construction of a district heating tube network with a flow valve, it is known to include in the district heating tube network a district heating pipe of the kind mentioned by way of introduction.

In this connection it should be understood that the term "pipe" refers to piece of tube and "district heating pipe" refers to piece of tube for incorporation as part of the district heating tube network.

Further, the term "district heating tube network" or district heating tube system, and the like, should be understood to include a district cooling tube network or district cooling tube system in the sense that cooling is seen as negative heating.

In known district heating pipes of the above kind the outlet of the service valve is provided opposite to the inlet on the valve housing and the direction of flow through the service valve from the inlet to the outlet is rectilinear. The access point for operating the valve body of the service valve is provided on a side of the valve housing.

Due to an intended position of installation of the district heating pipe whereby the access point of the service valve is provided in a well or manhole where space may be limited, access to the access point may be difficult in the above mentioned prior art.

It is an object of the present invention to facilitate access to the access point.

This object is achieved according to the invention by a district heating pipe of the kind mentioned by way of introduction in which the access point is positioned opposite to the inlet on the valve housing and the outlet is positioned on a side of the valve housing, whereby a direction of fluid passage out of the valve housing through the outlet is angled at an angle relative to a direction of passage into the valve housing through the inlet. Hereby is obtained that the access point is easily accessible from above facilitating e.g. application of a manual tool for operating the service valve.

In an embodiment the flow valve is an underground ball valve that is designed for district heating systems and other closed loop water systems where the water is treated to avoid internal corrosion. In an embodiment the ball valve has a fully welded body as a means for obtaining that the valve meets the requirements for valves used in district heating and district cooling systems and offer a high degree of security. In an embodiment the flow valve (ball valve) is used for opening or shutting off a passage through it to allow or shutting off a flow in the relevant part of a district heating tube network in which the flow valve is installed.

The service valve may e.g. be used for venting air or tapping water from the tube network. Using the service valve according to the invention, in which the direction of fluid passage out of the valve housing is angled relative to the direction of fluid passage into the valve, i.e. the direction of fluid passage out of the valve housing is angled relative to vertical when the branch pipe as most common is vertical, it is avoided that the fluid flow is directed vertically up and out of a well or manhole in which the service valve is situated and where an operator risk being hit.

In an embodiment the angle is at least 30°, preferably at least 45°, more preferably at least 60°, and still more preferably approx. 90°. By providing an angle of this kind space is provided for arranging the access point as indicated. An angle of 90° is beneficial from a production point of view.

In an embodiment the district heating pipe, the branch pipe, and valve housing are interconnected by welding. Further in such embodiment the district heating pipe, the branch pipe, and valve housing may comprise stainless steel, especially acid-proof stainless steel. Hereby a sturdy service valve with a long service life is provided.

In an embodiment the valve body is at least partially a body of revolution with a through hole and especially the valve body may be spherical. Hereby, in a manner known per se, a service valve of a sturdy construction may be provided. By the valve body being "at least partially a body of revolution" should be understood that at least the part(s) of the surface of the valve body that has to cooperate with internal sealing surfaces in the valve housing should be surface(s) of a body of revolution for said part(s) of the surface of the valve body to be able to be rotated around an axis into and out of engagement with the internal sealing surfaces.

In a further embodiment the through hole is T-shaped. This facilitates production. Preferably in this embodiment the vertical leg of the T-shape is extending from the inlet of the valve housing and the upper cross bar of the T-shape has one end moved into and out of alignment with the outlet of the valve housing by rotation around an axis coaxial with the inlet of the valve housing to respectively open and close the fluid passage through the service valve.

In an embodiment the outlet is provided with a thread for applying a closure in the form of a threaded plug or a threaded end cap. By applying such closure, a security against premature opening of an access to a district heating tube is obtained. Further, the thread provided at the outlet may be used for attaching a hose or the like.

In an embodiment a branch pipe with a service valve is found on either side of the flow valve. Hereby access to a district heating tube is provided on either side of a flow valve, which may be especially relevant in case the flow valve is shut off and different conditions may prevail on the two sides of the flow valve.

In an embodiment a twin district heating pipe is provided comprising two district heating pipes according to the invention interconnected by intermediate pieces. This embodiment facilitates providing adjacent flow valves in two district heating tubes running in parallel, such as an inflow tube and a return flow tube, whereby a flow valve is provided in each of the inflow tube and the return flow tube, and a service valve is provided upstream and/or downstream of both flow valves.

In the following the invention will be explained in further detail by way of examples of embodiments having reference to the accompanying schematic drawings, in which
Fig. 1 is a perspective view of a twin district heating pipe according to the invention;
Fig. 2 is a side view of the twin district heating pipe of Fig. 1;
Fig. 3 is a top view of the twin district heating pipe of Fig. 1;
Fig. 4 is an end view of the twin district heating pipe of Fig. 1;
Fig. 5 is a perspective view of a single district heating pipe according to the invention;
Fig. 6 is a side view of the district heating pipe of Fig. 5;
Fig. 7 is a perspective view of a branch pipe with a service valve;
Fig. 8 is an end view of the branch pipe of Fig. 7;
Fig. 9 is a sectional view as indicated by line VII-VII in Fig. 8, showing the service valve in an open position;
Fig. 10 is a side view of the branch pipe of Fig. 7;
Fig. 11 is a sectional view like Fig. 9, but showing the service valve in a closed position; and
Fig. 12 is a top view of the branch pipe and the service valve.

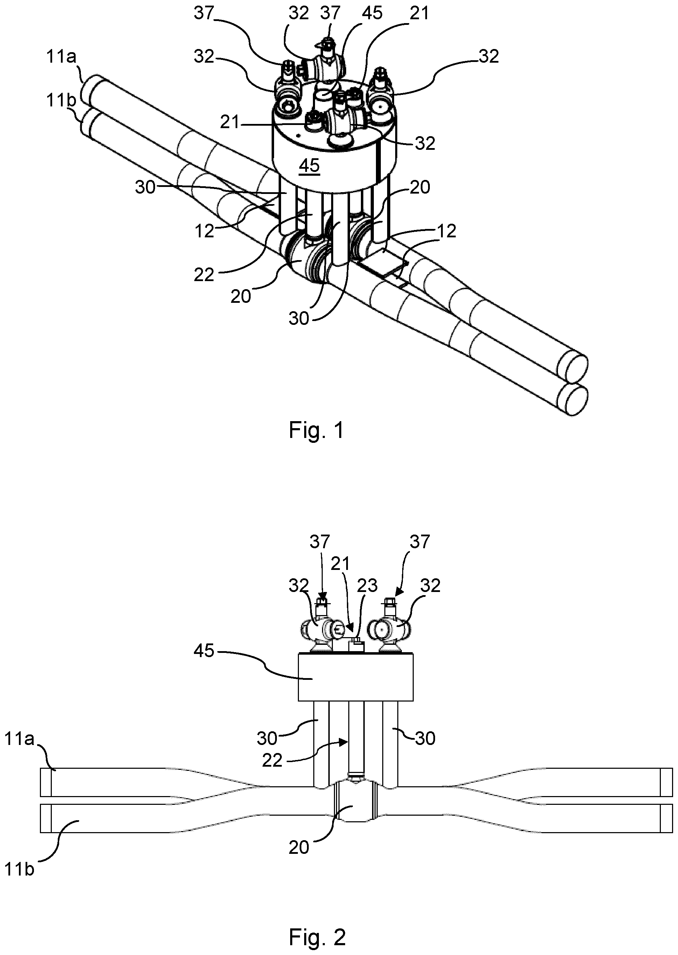

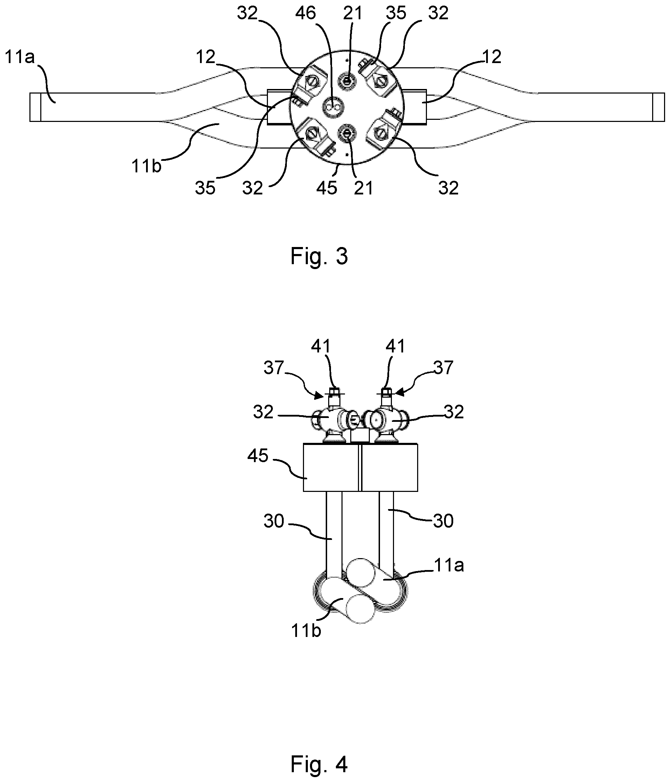

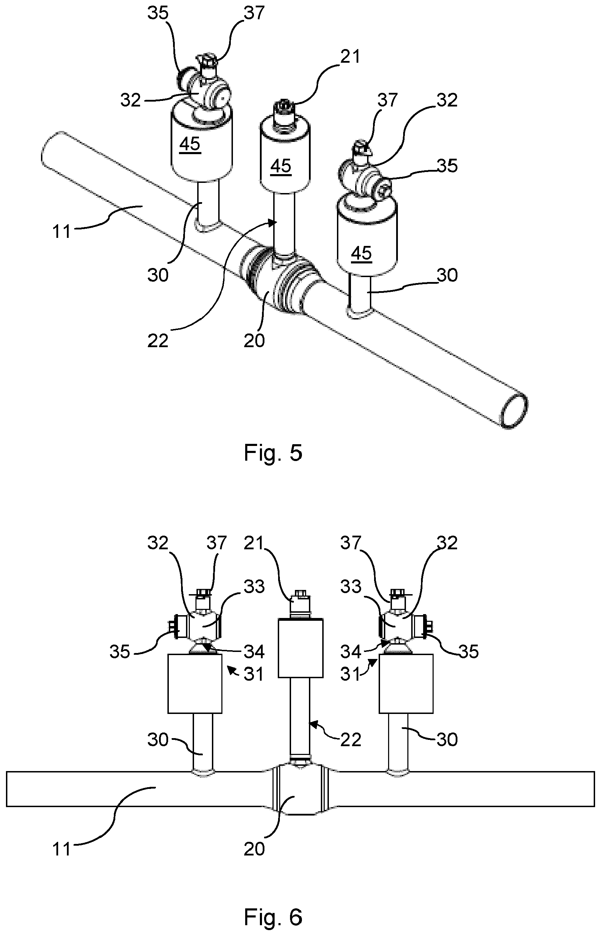

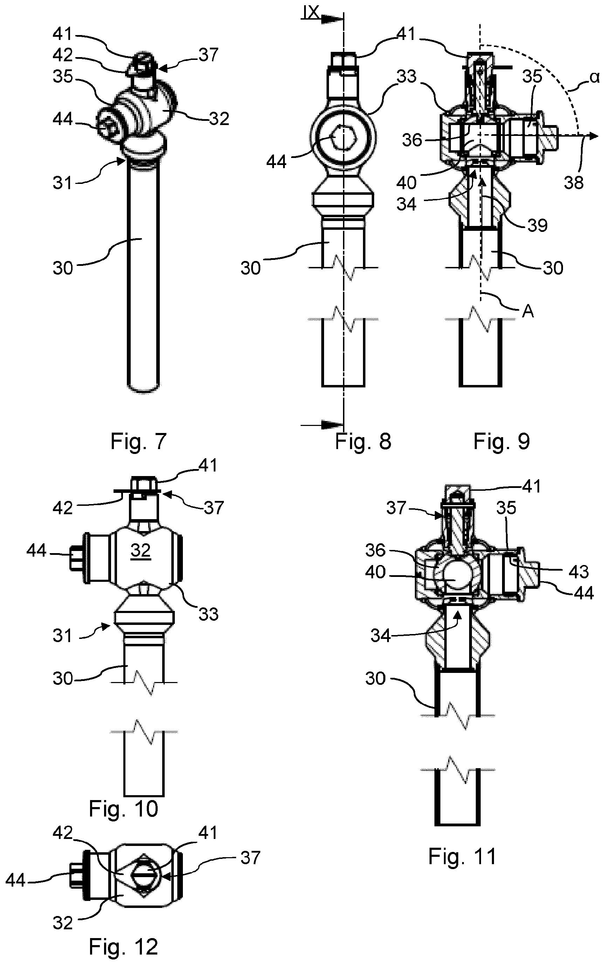

Figs. 1 to 4 and Figs. 5 and 6 show district heating pipes 11 (Figs. 5-6) and 11a, 11b (Figs. 1-4) for incorporation in a district heating tube network or system. The district heating pipes 11, 11a, 11b are respectively provided with a flow valve 20 for shutting off or throttling a flow in the part of the district heating tube network, in which the respective district heating pipe 11, 11a, 11b is installed. Further, in the embodiments shown, the district heating pipes 11, 11a, 11b are provided on either side of the flow valve 20 with a branch pipe 30 extending from the respective district heating pipe 11, 11a, 11b to a remote end 31 (see Figs. 7-12) of the branch pipe. At the remote end 31 the branch pipe 30 is provided with a service valve 32, which comprises a valve housing 33 with an inlet 34 connected to the remote end 31 of the branch pipe, an outlet 35, a valve body 36, and an access point 37 for operating the valve body 36 between an open position (Fig. 9), in which a fluid passage through the service valve 32 from the inlet 34 to the outlet 35 is open, and a closed position (Fig. 11), in which the fluid passage through the service valve 32 from the inlet 34 to the outlet 35 is closed.

In the specific embodiment shown as a non-limiting example the flow valve 20 is a ball valve for shutting off a flow in the part of the district heating tube network, in which the respective district heating pipe.

The district heating pipes 1a, 1b shown in Figs. 1-4 are provided as a twin district heating pipe provided by the two district heating pipes 1a, 1b interconnected by intermediate pieces 12. This embodiment as a twin district heating pipe facilitates providing adjacent flow valves in two district heating tubes running in parallel, such as an inflow tube and a return flow tube, whereby a flow valve 20 is provided in each of the inflow tube and the return flow tube, and a service valve 32 is provided upstream and downstream of both flow valves 20.

The flow valves 20 will, when the district heating pipes 1, 1a, 1b, respectively, are installed in the ground, usually have an access point 21 for operating the flow valve 20 provided in a well or manhole. The access point 21 is in the embodiment shown provided by a vertical shaft or stem 22 extending from the flow valve 20 to an upper end of the stem 22, which in the present embodiment is provided as a hexagon end 23 for engagement with a tool, e.g. a manual tool for attachment to the hexagon end 23 of the stem 22 for rotating the stem 22 around a longitudinal axis thereof to operate the flow valve 20. Usually the district heating pipe 1, 1a, 1b is installed in the ground such that the longitudinal axis of the stem 22 is vertical.

In the present embodiment the flow valve 20 is an underground ball valve that is designed for district heating systems and other closed loop water systems where the water is treated to avoid internal corrosion. In this embodiment the ball valve has a fully welded body, as a means for obtaining that the valve meets the requirements for valves used in district heating and district cooling systems and offer a high degree of security.

In the embodiments shown, on both sides of the flow valve 20, i.e. upstream and downstream of the flow valve 20, a service valve 32 is provided for access, when the district heating pipe 1, 1a, 1b is installed, into the district heating tube and to a fluid in the district heating tube. It should be understood that it is possible to have a service valve 32 provided only on one side of the flow valve 20, either upstream or downstream thereof.

According to the present invention, the access point 37 of the service valve 32 is positioned opposite to the inlet 34 on the valve housing 33 and the outlet 35 is positioned on a side of the valve housing 33. Thereby the direction 38 of fluid passage out of the valve housing 33 through the outlet 35 is angled at an angle α relative to a direction 39 of passage into the valve housing 33 through the inlet 34.

In the present embodiment the angle α is approx. 90°, but it should be understood that other angles are possible. Thus, preferably the angle α should be at least 30°, preferably at least 45°, and more preferably at least 60°. By providing an angle of this kind space is provided for arranging the access point 37 as indicated. The angle of 90° is i.a. beneficial from a production point of view.

In the present embodiment the district heating pipe 1, 1a, 1b, the branch pipe 30, and valve housing 33 are interconnected by welding. Further, in the present embodiment the district heating pipe 1, 1a, 1b, the branch pipe 30, and valve housing 33 is made of acid-proof stainless steel.

In the present embodiment the valve body 36 is spherical with a T-shaped through hole 40, the service valve 32 being in general constructed as a ball valve.

In the present embodiment the vertical leg of the T-shape is extending from the inlet 34 in alignment with the direction 39 of passage into the of the valve housing 33 and the upper cross bar of the T-shape has one end moved into and out of alignment with the outlet 35 of the valve housing 33 by rotation around an axis A coaxial with the inlet 34 of the valve housing to respectively open and close the fluid passage through the service valve.

The access point 37 is in the embodiment shown provided by a hexagon end 41 connected to the valve body 36. An indicator 42 is provided for indicating the rotational position of the valve body 36.

In the present embodiment the outlet 35 is provided with a thread 43 and a closure in the form of a threaded plug 44 is applied. Thus, in the present embodiment the thread 43 at the outlet 35 is an internal thread, and the thread of the plug 44 is an external thread. When applied the plug 44 provides a security against premature opening of the access to the district heating tube in which the district heating pipe 11, 11a, 11b is mounted. The closure or plug 44, when mounted, also protects the service valve 32 against dirt and other matter that might unintentionally enter through the outlet 35. When the plug 44 is removed, the thread 43 may be used for attaching a hose or the like, e.g. in case the service valve 32 is used for tapping fluid (water) from the district heating tube and such fluid (water) should be collected rather than being allowed to sink into the ground at the bottom of the well or manhole in which the service valve(s) 32 and access point 21 for operating the flow valve is located.

The district heating pipes 11, 11a, 11b shown in Figs. 1 to 6 are, as also indicated above, intended for incorporation into a district heating tube of a district heating system or tube network. After incorporation insulation will be applied as it will be known to the skilled person and soil, gravel, or the like can be added around the district heating tube and the district heating pipe(s) not exceeding the upper level of insulation 45 provided around the branch pipe(s) 30 and stem(s) 22 thus ensuring access to the access points 21 and 37. In normal installation the branch pipe(s) 30 and the stem(s) 22 will extend vertically from the district heating tube below.

In the embodiment shown in Figs. 1 to 4 sensor access points 46 are provided for sensors is it will per se be appreciated by the skilled person.

By providing the access point 37 as indicated, i.e. on top of the valve housing 33 so to say, is obtained that the access point 37 is easily accessible from above facilitating e.g. application of a manual tool for operating the service valve 32.

The service valve 32 may e.g. be used for venting air or tapping water from the tube network. Especially when tapping water, using a service valve according to the invention, in which the direction of fluid passage out of the valve housing is angled relative to the direction of fluid passage into the valve, i.e. the direction of fluid passage out of the valve housing is angled relative to vertical, when the branch pipe as commonly is mounted to be vertical, it is avoided that the fluid flow is directed vertically up and out of a well or manhole in which the service valve is situated and where an operator risk being hit.

## Claims

1. A district heating pipe (11, 11a, 11b) for incorporation in a district heating tube network, with a flow valve (20) for shutting off or throttling a flow in the district heating tube network and a branch pipe (30) extending from the district heating pipe (11, 11a, 11b) to a remote end (31) of the branch pipe (30), said branch pipe (30) having a service valve (32) at the remote end (31), said service valve (32) comprising a valve housing (33) with an inlet (34) connected to the remote end (31) of the branch pipe (30), an outlet (35), a valve body (36), and an access point (37) for operating the valve body (36) between an open position, in which a fluid passage through the service valve (32) from the inlet (34) to the outlet (35) is open, and a closed position, in which the fluid passage through the service valve (32) from the inlet (34) to the outlet (35) is closed, **characterized in that** the access point (37) is positioned opposite to the inlet (34) on the valve housing (33) and the outlet (35) is positioned on a side of the valve housing (33), whereby a direction (38) of fluid passage out of the valve housing through the outlet is angled at an angle (α) relative to a direction (39) of passage into the valve housing (33) through the inlet (34).

2. A district heating pipe according to claim 1, wherein the outlet (35) is provided with a thread (43) for applying a closure in the form of a threaded plug (44) or a threaded end cap.

3. A district heating pipe according to claim 1 or 2, wherein the angle (α) is at least 30°, preferably at least 45°, more preferably at least 60°, and still more preferably approx. 90°.

4. A district heating pipe according to any one of claims 1 to 3, wherein the district heating pipe (11, 11a, 11b), the branch pipe (30), and valve housing (33) are interconnected by welding.

5. A district heating pipe according to any one of claims 1 to 4, wherein the valve body (36) is at least partially a body of revolution with a through hole (40).

6. A district heating pipe according to claim 5, wherein the valve body (36) is spherical.

7. A district heating pipe according to claim 5 or 6, wherein the through hole (40) is T-shaped.

8. A district heating pipe according to claim 7, wherein the vertical leg of the T-shape is extending from the inlet (34) of the valve housing (33) and the upper cross bar of the T-shape has one end moved into and out of alignment with the outlet (35) of the valve housing (33) by rotation around an axis (A) coaxial with the inlet (34) of the valve housing (33) to respectively open and close the fluid passage through the service valve (32).

9. A district heating pipe according to any of claims 1 to 8, wherein a branch pipe (30) with a service valve (32) is found on either side of the flow valve (20).

10. A twin district heating pipe comprising two district heating pipes (11a, 11b) according to any one of claims 1 to 9 interconnected by intermediate pieces (12).
